# EUROPEAN PATENT APPLICATION

(11) **EP 4 763 796 A1**
(43) Date of publication of application: **24.06.2026**
(21) Application number: 24222682.7
(22) Date of filing: 21.12.2024
(51) Int. Cl.: B82Y 15/00, G01N 27/327, G01N 33/487

(54) **METHOD OF PRODUCING A METAL MICRO-/NANOELECTRODE AND MICRO-/NANOELECTRODE WITH SINGLE-CRYSTALLINE METAL DEPOSIT**

(71) Applicant: ECOLE POLYTECHNIQUE FEDERALE DE LAUSANNE (EPFL), 1015 Lausanne (CH)
(72) Inventor: SABZEHPARVAR, Milad, 1024 Ecublens (CH); TAGLIABUE, Giulia, 1093 La Conversion (CH)
(74) Representative: ABREMA SA

(57) **Abstract**

There is described method of producing a metal micro-/nanoelectrode (EL), the method comprising:
(a) providing a glass pipette template (PT), the glass pipette template (PT) exhibiting a tapered portion (TP) terminating with a tip of micrometric or nanometric scale, the tapered portion (TP) being adapted to contain a solution;
(b) filling at least part of the tapered portion (TP) of the glass pipette template (PT) with a chemical growth solution (GS) containing a metal precursor suitable for selective growth of a metal deposit (MD) inside the tapered portion (TP);
(c) processing the taper-filled glass pipette templates (PT) in bulk media (BM) containing a reacting agent to drive nucleation and growth of a metal deposit (MD) from the chemical growth solution (GS) in the tapered portion (TP) of the glass pipette template (PT); and
(d) physically connecting a micro-wire (MW) to the metal deposit (MD) formed inside the tapered portion (TP) of the glass pipette template (PT).

The method especially allows the formation of thin-wall micro-/nanoelectrodes (EL) with single-crystalline metal deposits (MD), which forms another aspect of the invention.

## Description

### TECHNICAL FIELD

The present invention generally relates to a method of producing a metal micro-/nanoelectrode, as well as a micro-/nanoelectrode with single-crystalline metal deposit.

### BACKGROUND OF THE INVENTION

Thin-wall metal micro-/nanoelectrodes (UMEs/NEs) are electrochemical probes basically consisting of a metallic core (e.g. disc-shaped, recessed or protruding) encased in a thin insulating sheath, typically made of glass. These thin-wall electrodes are characterized by an "RG value" (which is defined as the ratio of the glass radius over the conductive/metal core radius) of less than 10, preferably of less than 2. Because of their very small footprint and enhanced mass transport rates and fast electrochemical time response, thin-wall UMEs/NEs are tools of key importance in applications ranging from high-resolution electrochemical microscopy to surface-enhanced Raman spectroscopy, fundamental electrochemical studies, and biosensing and non-invasive electrochemistry inside living cells and neurons. Furthermore, these electrodes hold significant potential for integration with optical near-field techniques, such as fluorescence microscopy and TERS, paving the way for groundbreaking advancements in single-molecule detection and analysis. More broadly, multi-functional UMEs/NEs with multiple channels can open unprecedented opportunities for multi-functional imaging and electrochemical research.

Nanoelectrodes (NEs), especially, with a tip radius typically below approximately 100 nm, are powerful electrochemical probes and sensors for studying electrochemical processes at nanometric scale. This is largely due to their size being much smaller than the diffusion layer thickness, resulting in extremely high mass transport rates, low ohmic losses, small RC time constants, and fast steady-state responses. These unique advantages enable investigation of numerous phenomena and processes that cannot be studied at macroscale with larger electrodes, including electrochemistry of individual molecules and nanoparticles, formation and growth of transient metal nuclei, nanobubbles, short-lifetime intermediates, rapid heterogeneous electron transfer kinetics, and non-invasive electrochemistry inside living cells. Among all metals, gold nanoelectrodes find more extensive applications in bio-analysis and catalysis research due to their inertness, high surface reactivity and higher affinity for biomolecules and chemical bonds.

Laser pulling of glass-sealed metal microwires is a common technique for fabricating metal micro-/nanoelectrodes. However, despite the improvements achieved in the past decades, one is still faced with challenges to reproducibly and mass-produce high-quality, "leak-free", metal micro-/nanoelectrodes. Gold micro/-nanoelectrodes, especially, are typically manufactured using quartz as the relevant glass material, and issues primarily arise due to the large difference between the melting point of gold (1'064 °C) and quartz (1'710 °C), resulting in low success rate for pulling continuous gold micro-/nanoelectrodes and a poor seal at the gold/quartz interface, which leads to an unstable electrochemical performance. More fundamentally, the macro-/nanoelectrodes obtained by the conventional techniques typically exhibit a thick glass insulation sheath, corresponding to RG values larger than 10, and a metal core with a randomly oriented polycrystalline nature with many nanocrystallites.

Nanoelectrodes with small RG values, especially ranging from 1.2 to 2, have emerged as critical tools for probing neurotransmitters, and achieving ultrahigh spatial resolution in chemical imaging. This originates from their small footprint, minimizing the mechanical damage to a cell in neurobiology and allowing extremely small tip-to-substrate distances and thus enhanced sensitivity in scanning electrochemical microscopy (SECM), especially. Despite huge efforts in advancing the fabrication of such NEs, for example by using a thin polymer coating on metal micro-/nanowires, or by reducing the thickness of the glass sheath of laser-pulled NEs by chemical etching or local heating, these processes remain either very time-consuming and challenging, or frequently result in a defective insulating sheath.

Glass nanopipettes, instead, are thin-wall nano-pore structures that are nowadays easily fabricated with sub-50 nm orifice sizes at uniquely high yield and repeatability. Recently, room-temperature template-assisted chemical and electrochemical deposition of metals in glass nanopipettes has been found as a promising approach for controlled fabrication of low-RG-value metal NEs. However, crystal growth is a self-limited process in all these methods, resulting in short-length deposits and limiting the performance only to a wireless bipolar electrochemical contacting approach. Moreover, the yield of these serial fabrication processes remains low, and poor sealing at metal/glass interface, especially for larger-size NEs, remains an issue, leading to a high background ionic current in addition to the Faradaic current detection. Thus, it is necessary to develop an improved processing method for deposition of very long length metal (especially gold) crystals and realization of high-quality, physically-contacted thin-wall metal micro-/nanoelectrodes.

Papers titled "Fabrication of Nanoelectrodes and Metal Clusters by Electrodeposition", Jeyavel VELMURUGAN et al., ChemPhysChem, Volume 11, Issue 13, Special Issue: Electrochemistry, Chemistry Europe, pp. 3011-3017, September 10th, 2010 (https://doi.org/10.1002/cphc.201000321) and "Fabrication of Electrochemical DNA Sensors on Gold-Modified Recessed Platinum Nanoelectrodes", S. Ehsan SALAMIFAR et al., Analytical Chemistry, Volume 86, Issue 6, American Chemical Society, pp. 2849-2852, February 24th, 2014 (https://doi.org/10.1021/ac403816h) report solutions aimed at avoiding the intrinsic problem with laser-pulling of gold (Au) nanoelectrode tips, i.e. bad quality of the obtained gold/glass interface. These papers report a modified approach based on laser-pulled platinum (Pt) nanoelectrode tips consisting in essence of an electrochemical recession/etching steps of the platinum deposit followed by electrochemical deposition of gold (Au) on the recessed platinum nanoelectrode tips. These papers however report that the gold deposit forms a porous structure and not a pore-free deposit. Furthermore, the electrodes produced according to this approach are in effect thick-wall metal/glass electrodes, and the fabrication process is limited to serial production. Moreover, this technique cannot or can hardly be applied to the production of multifunctional micro-/nanoelectrodes and double/dual-barrel micro-/nanoelectrodes (including micro-/nanoelectrodes based on so-called theta capillaries) as it involves a sealing step that in effect leads to obturation of the channels of the capillaries.

Paper titled "Preparation, electrochemical responses and sensing application of Au disk nanoelectrodes down to 5 nm", Yaoyao ZHANG et al., RSC Advances, Volume 5, Issue 94, the Royal Society of Chemistry, pp. 77248-77254, September 4th, 2015 (https://doi.org/10.1039/C5RA14777H) reports about the preparation and electrochemical response of thick-wall gold (Au) nanoelectrodes as small as 5 nm in radii with greater than 90% reproducibility by a modified laser-pulling approach with two times sealing in a bilayer capillary. This fabrication process is however likewise limited to serial production and only allows the production of electrodes with very thick glass walls (RG values of approx. 50). Moreover, this paper is silent about any detailed electrochemical quality analysis of the relevant electrodes, especially as regards the quality of the gold/glass interface.

Paper titled "Origins of Nanoscale Damage to Glass-Sealed Platinum Electrodes with Submicrometer and Nanometer Size", Nikoloz NIORADZE et al., Analytical Chemistry, Volume 85, Issue 13, American Chemical Society, pp. 6198-6202, June 8th, 2013 (https://doi.org/10.1021/ac401316n) reports about the performance of thin-wall platinum (Pt) nanoelectrodes that are made by heat annealing of thick-wall laser-pulled platinum (Pt) microelectrode tips using a special microforge apparatus (namely the MF-900 apparatus by NARISHIGE Group, Tokyo, Japan / https://narishiqe-qroup.com/). This is currently a workable solution for decreasing the glass wall thickness of laser-pulled nanoelectrodes, but suffers from major limitations, especially the fact that the process is highly dependent on the skills and experience of the operator to perform a controlled reshaping of the glass walls. This process therefore lacks reproducibility and can hardly be scaled up for mass production.

Papers titled "Accurate control of the electrode shape for high resolution shearforce regulated SECM", Mathieu ETIENNE et al., Electrochimica Acta, Volume 110, pp. 16-21, November 1st, 2013 (https://doi.org/10.1016/j.electacta.2013.03.096) and "Fabrication of glass-coated electrodes with nano- and micrometer size by means of dissolution with HF", Kochi AOKI et al., Electrochimica Acta, Volume 55, Issue 24, pp. 7328-7333, October 1st, 2010 (https://doi.org/10.1016/j.electacta.2010.06.086) report other solutions aimed at decreasing the glass wall thickness of thick-wall micro-/nanoelectrodes. However, these methods either use damaging polishing abrasives or hazardous hydrofluoric acid that can result in defective glass sheaths, especially for small RG values. Importantly, they are very time-consuming and are strongly dependent on the skills of the operator. These methods cannot accordingly be used for high-yield and controlled fabrication of thin-wall nanoelectrodes. Moreover, these papers are silent about any detailed electrochemical quality analysis of the relevant electrodes.

Paper titled "Rapid Assessment of Platinum Disk Ultramicroelectrodes Sealing Quality by Cyclic Voltammetry Approach", Nataraju BODAPPA, Analytical Methods, Volume 12, Issue 27, The Royal Society of Chemistry, pp. 3545-3550, June 15th, 2020 (https://doi.org/10.1039/D0AY00649A) reports about a rapid assessment method which is based on performing blank voltammetry in the double-layer (DL) and hydrogen evolution reaction (HER) regimes and analysing the response at different scan rates and/or multiple cycles. This method has been found to be more trustable than outer-sphere voltammetry and RF analysis which have intrinsic limitations.

Paper titled "Recent Advances in the Glass Pipet: from Fundament to Applications", Yuanshu ZHOU et al., Analytical Chemistry, Volume 93, Issue 1, American Chemical Society, pp. 324-335, November 27th, 2021 (https://doi.org/10.1021/acs.analchem.1c04462) reports about the current situation with the fabrication of thin-wall glass nanopipettes, which are basically producible by the mere pushing of a button with very high repeatability.

Paper titled "Fabrication of Metal Nanoelectrodes by Interfacial Reactions", Xinyu ZHU et al., Analytical Chemistry, Volume 86, Issue 14, American Chemical Society, pp. 7001-7008, June 23rd, 2014 (https://doi.org/10.1021/ac501119z) reports about the fabrication of thin-wall silver (Ag) nanoelectrodes by self-assembling metal nanoparticles by an interfacial reaction at a liquid/liquid interface. This paper shows that the technique works for other metals as well but needs optimization of the growth conditions. The nanoelectrodes fabricated according to this technique have a porous nanoparticulate morphology, and the technique requires hazardous silanization and Piranha treatments on glass nanopipettes. Importantly, the technique likewise only allows for serial fabrication. Furthermore, the metal crystal growth resulting from this technique is a self-terminating process that results in a very short length metal deposit, limiting the performance to a bipolar electrochemical contacting approach. Moreover, it is not possible or extremely challenging to connect a metal wire to the short-length metal deposit inside the narrow channel of a nanopipette taper.

Papers titled "Bipolar Electrochemical Method for Dynamic In Situ Control of Single Metal Nanowire Growth", Marissa WOOD et al., ACS Nano, Volume 9, Issue 3, American Chemical Society, pp. 2454-2464, February 19th, 2015 (https://doi.org/10.1021/acsnano.5b00139), "Wireless nanopore electrodes for analysis of single entities", Rui GAO et al., Nature Protocols, Issue 14, pp. 2015-2035, June 5th, 2019 (https://doi.org/10.1038/s41596-019-0171-5) and "A 30 nm Nanopore Electrode: Facile Fabrication and Direct Insights into the Intrinsic Feature of Single Nanoparticle Collisions", Rui GAO et al., Angewandte Chemie, International Edition, Volume 57, Issue 4, German Chemical Society, pp. 1011-1015, December 6th, 2017 (https://doi.org/10.1002/anie.201710201) report a bipolar electrochemical deposition method for fabrication of gold (Au) nanoelectrodes inside thin-wall glass nanopipettes. The authors found that the crystal growth is a self-terminating process and that a good gold/glass interface, i.e. with no interfacial gap, could only be possible at the optimized condition for a specific size of nanopipettes, namely about 30 nm in tip radius. A poor sealing quality of metal/glass interface was reported for larger size nanoelectrodes, resulting in a high background ionic current in addition to the Faradaic current detection that can limit the chemical detection sensitivity. More importantly, the relevant fabrication process is once again a serial production process that requires one-by-one crystal deposition inside nanopipettes, and the electrodes are limited to a bipolar electrochemical contacting approach. This contacting approach has several intrinsic limitations, including regarding stability of the electrodes over time. Moreover, complete injection of an electrolyte inside the narrow channel of the nanoelectrodes without leaving any air bubble is extremely challenging, especially if the electrodes are dried after the crystal growth with a view to perform a focussed ion beam (FIB) process for perfection of the electrodes. Air bubbles result in a high electrical resistance for the electrochemical contacting approach. The authors of these papers do not report about the electrochemical characterization of the bipolar gold (Au) nanoelectrodes produced by this method, which is required for many electrochemical applications that require information about the quality of the electrodes.

Papers titled "Coupled Electrochemical Reactions at Bipolar Microelectrodes and Nanoelectrodes", Joshua P. GUERRETTE et al., Analytical Chemistry, Volume 84, Issue 3, pp. 1609-1616, January 9th, 2012 (https://doi.orq/10.1021/ac2028672) and "Revisiting a classic redox process on a gold electrode by operando ToF-SIMS: where does the gold go?", Xin HUA et al., Chemical Science, Volume 10, Issue 24, pp. 6215-6219, May 8th, 2019 (https:/Idoi.orq/10.1039/C9SC00956F) report the intrinsic limitations with the electrochemical contacting approach, such as non-linearity for the current and electrolyte concentration, and metal dissolution and degradation in the presence of the required redox couples. These limit the performance of bipolar micro-/nanoelectrodes by decreasing their detection sensitivity and stability, respectively.

Paper titled "Nanopipette-Based Electroplated Nanoelectrodes", Rui HAO et al., Analytical Chemistry, Volume 88, Issue 1, American Chemical Society, pp. 614-620, November 28th, 2015 (https://doi.org/10.1021/acs.analchem.5b03548) reports a direct electrochemical deposition of metals inside thin-wall nanopipette templates using a liquid gallium/indium alloy electrode. However, this method is likewise unable to deposit long-length metal crystals within the nanopipette tapers. In that regard, the authors further report a second growth process of a conductive polymer on the short-length metal deposit for realization of a physical contact using a metallic wire. This multi-step deposition of metals and polymers can result in a low success rate for obtaining physically contacted metal nanoelectrodes. Moreover, it is once again a serial fabrication process, and unwanted residues of the liquid gallium/indium alloy on the body of the nanoelectrodes limit the achievable nanoelectrode size to larger values after a focussed ion beam (FIB) cutting process. The authors have shown that the electrochemical deposition method also works for multifunctional nanoelectrodes, as well as for double-barrel and dual-barrel nanoelectrodes.

Paper titled "TEM-Assisted Fabrication of Sub-10 nm Scanning Electrochemical Microscopy Tips", Xiang WANG et al., Analytical Chemistry, Volume 91, Issue 24, American Chemical Society, pp. 15355-15359, November 19th, 2019 (https:/Idoi.orq/10.1021/acs.analchem.9b04316) reports a key challenge with laser-pulling of metal nanoelectrodes, namely discontinuity of the laser-pulled metal wire. Especially, the laser pulling approach is a quasi-random process and the metallic wire (typically made of gold or platinum) finds discontinuity at the narrow taper sections of the nanoelectrode within the glass body. This implies many trials and errors for focussed ion beam cutting / mechanical polishing of the electrodes from the most bottom section where there is the minimum continuous wire disc exposed. This challenges still exists and can limit the size distribution of the fabricated electrodes as well, thus requiring complicated TEM microscopy help as discussed in this paper.

Papers titled "Laser-pulled ultralong platinum and gold nanowires", Stephen J. PERCIVAL, et al., RSC Advances, Volume 4, Issue 21, pp. 10491-10498, February 3rd, 2014 (https://doi.org/10.1039/C3RA47207H) and "Operando Scanning Electrochemical Microscopy Reveals Facet-Dependent Structure-Selectivity Relationship for CO2 Reduction on Gold Surfaces", Yunwoo NAM et al., ACS Catalysis, Volume 4, Issue 22, pp. 17084-17089, November 5th, 2024 (https://doi.org/10.1021/acscatal.4c05007) report about the polycrystalline nature of laser-pulled and cold-pulled gold and platinum micro-/nanowires. By doing X-ray and electron-backscattered diffraction techniques, the authors show that the wires exhibit multiple crystal domains with random crystallographic orientations, which indicates the incapability of the relevant pulling technique in repeatably producing single-crystalline micro-/nanoelectrodes.

There is therefore a need for an improved solution.

### SUMMARY OF THE INVENTION

A general aim of the invention is to remedy the above-noted shortcomings of the prior art solutions.

More precisely, an aim of the present invention is to provide an improved method for producing a metal micro-/nanoelectrode which overcomes the deficiencies and limitations of the known solutions.

A further aim of the invention is to provide such a method that is not limited to serial production.

Another aim of the invention is to provide such a method that can versatilely be used for the production of various geometries of micro-/nanoelectrodes (including but not limited to dual, double barrel, and recessed L-shape configurations) and with a large variety of metals or combinations of metals (including but not limited to gold, platinum, copper, silver, palladium, bismuth, etc.).

An additional aim of the invention is to provide such a method that allows for the fabrication of metal micro-/nanoelectrodes with single-crystalline metal deposits.

Yet another aim of the invention is to provide such a solution that is particularly suited to the direct production of thin-wall metal micro-/nanoelectrodes with low RG values, and a high repeatability and reproducibility yield.

An aim of the invention is also to provide such a solution that allows the production of long-length metal deposits inside the taper of micro-/nanopipette templates.

These aims, and others, are achieved thanks to the solutions defined in the claims.

In accordance with the invention, there is accordingly provided a method of producing a metal micro-/nanoelectrode, the features of which are recited in claim 1, namely such a method comprising:
(a) providing a glass pipette template, the glass pipette template exhibiting a tapered portion terminating with a tip of micrometric or nanometric scale, the tapered portion being adapted to contain a solution;
(b) filling at least part of the tapered portion of the glass pipette template with a chemical growth solution containing a metal precursor suitable for selective growth of a metal deposit inside the tapered portion;
(c) processing the taper-filled glass pipette templates in bulk media containing a reacting agent to drive nucleation and growth of a metal deposit from the chemical growth solution in the tapered portion of the glass pipette template; and
(d) physically connecting a micro-wire to the metal deposit formed inside the tapered portion of the glass pipette template.

Thanks to the invention, which in essence involves formation of the metal deposit by wet chemical growth, metal micro-/nanoelectrodes with particularly long metal deposits can be produced, and this with great reproducibility. The invention also demonstrates great versatility in that it enables the production of a large variety of micro-/nanoelectrode geometries and configurations, moreover in batches, and using different metals (or even metal alloys, as well as combinations of metals) as the conductive core of the micro-/nanoelectrodes. The proposed wet chemical growth approach also enables the formation of micro-/nanoelectrodes with single-crystalline metal deposits that exhibit vastly improved performance, especially for scanning electrochemical microscopy (SECM).

By way of preference, the chemical growth solution is a polyol-based solution.

From a more general perspective, the metal precursor may be any desired precursor of a metal suitable (i.e. any suitable metal salt/ions) for incorporation in the chemical growth solution and formation of the desired metal deposit, in particular a precursor of a metal selected from the group of metals comprising gold (Au), platinum (Pt), silver (Ag), copper (Cu), palladium (Pd), bismuth (Bi), and alloys thereof, the metal precursor being provided in the form of a metal salt or metal ions contained in the chemical growth solution.

In accordance with a particularly advantageous embodiment suitable for the formation of gold (Au) micro-/nanoelectrodes, the chemical growth solution includes a gold salt, preferably tetrachloroaurate ions ([AuCl₄]⁻), and a polyol compound, preferably ethylene glycol (EG).

In accordance with a preferred embodiment, step (b) includes:
(b.1) preferably introducing a solution devoid of any metal precursor, such as pure ethylene glycol (EG), in a distal end section at the tip of the tapered portion of the glass pipette template; and
(b.2) back filling the tapered portion of the glass pipette template with the chemical growth solution.

Carrying both steps (b.1) and (b.2) is beneficial in that a high concentration of the metal ions/salt is initially prevented from reaching the distal end section at the tip of the tapered portion of the glass pipette template, leading to the formation of the metal deposit with a comparatively lower concentration of metal ions/salt at the tip of the tapered portion, thereby preventing or limiting the formation of metal deposit on the exterior surface of the glass pipette template. In other words, this double filling strategy avoids the growth of metal particles on the outside of the pipette template and favours the growth of a long-length metal deposit inside the tapered portion, upwards from the tip. This being said, step (b.1) may be omitted entirely and back filling of the tapered portion of the glass pipette template with the chemical growth solution could be contemplated a single-step filling procedure.

The glass pipette templates may especially be produced by a pulling process, preferably a pulling process assisted by laser, where heat is supplied to locally soften glass capillaries, and a variable force is applied in a controlled manner for a desired duration to cause elongation of the locally softened glass material.

While other glass materials could be contemplated, the glass pipette templates are preferably made of borosilicate glass, which is both robust and cost-efficient to implement from a production perspective.

The glass pipette templates may advantageously be micropipette templates exhibiting a tip radius that is below 5 µm or nanopipette templates exhibiting a tip radius that is below 200 nm, especially below 100 nm, and preferably of 20 nm or less (the tip radius being measured at the tip of the tapered portion).

In accordance with a particularly preferred embodiment, step (c) includes insertion of the taper-filled glass pipette templates into the bulk media and heating of the taper-filled glass pipette templates inserted in the bulk media. The bulk media may conveniently comprise a polyol compound, such as ethylene glycol (EG), and a reacting salt, such as sodium borohydride (NaBH₄) - as the reacting agent - in an alcohol, preferably ethanol.

Furthermore, heating of the bulk media during step (c) may especially be carried out at a temperature exceeding 60°C (e.g. 110°C) for several hours, preferably more than 4 hours (for instance 24 hours), which favours realization of long-length metal deposits.

One preferred implementation may involve holding of the taper-filled glass pipette templates vertically during step (c) into vials containing the bulk media, and simultaneous processing of the vials during step (c) within a furnace, such as a muffle furnace.

By way of preference, the micro-wire is a conductive micro-wire preferentially made of tungsten (W), copper (Cu), silver (Ag) or platinum (Pt), in particular an electrochemically sharpened conductive micro-wire.

Step (d) may advantageously be performed under an optical microscope.

The method of the invention may further comprise the step of perfecting the tip of the tapered portion of the glass pipette template to shape the tip of the tapered portion of the glass pipette template and the metal deposit formed therein, which is of particular interest for the production of metal micro-/nanoelectrodes suitable for use e.g. as electrochemical probe for scanning electrochemical microscopy (SECM). In this context, perfecting the tip of the tapered portion of the resulting metal micro-/nanoelectrode is preferably performed by focused ion beam (FIB) milling. However, mechanical polishing could also be contemplated as an alternative approach to perfect the electrodes.

Also claimed is a metal micro-/nanoelectrode comprising (i) a glass pipette body exhibiting a tapered portion terminating with a tip of micrometric or nanometric scale, (ii) a single-crystalline metal deposit formed - by wet chemical growth - inside at least part of the tapered portion of the glass pipette body, and (iii) a micro-wire extending partly inside the glass pipette body and physically connected to the single-crystalline metal deposit.

These aspects and others of the invention are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:

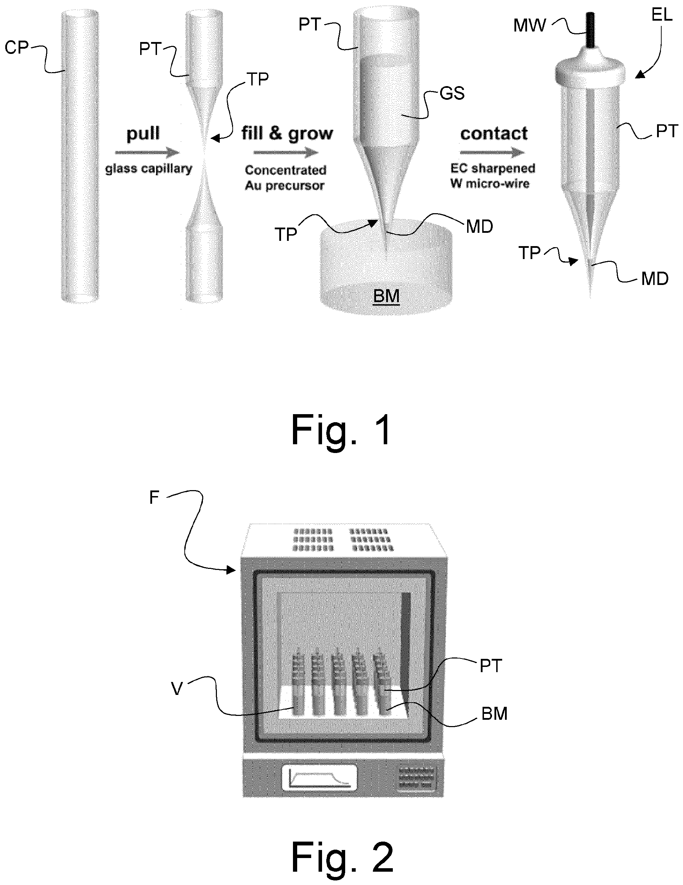

- Figure 1 is a schematic diagram illustrating a method of producing micro-/nanoelectrodes in accordance with an embodiment of the invention;
- Figure 2 is a schematic illustration of a furnace used to process a batch of multiple glass vials, each holding a corresponding taper-filled glass pipette template in a vertical orientation into bulk media, for the purpose of driving nucleation and growth of a metal deposit from a chemical growth solution in the tapered portion of each glass pipette template;

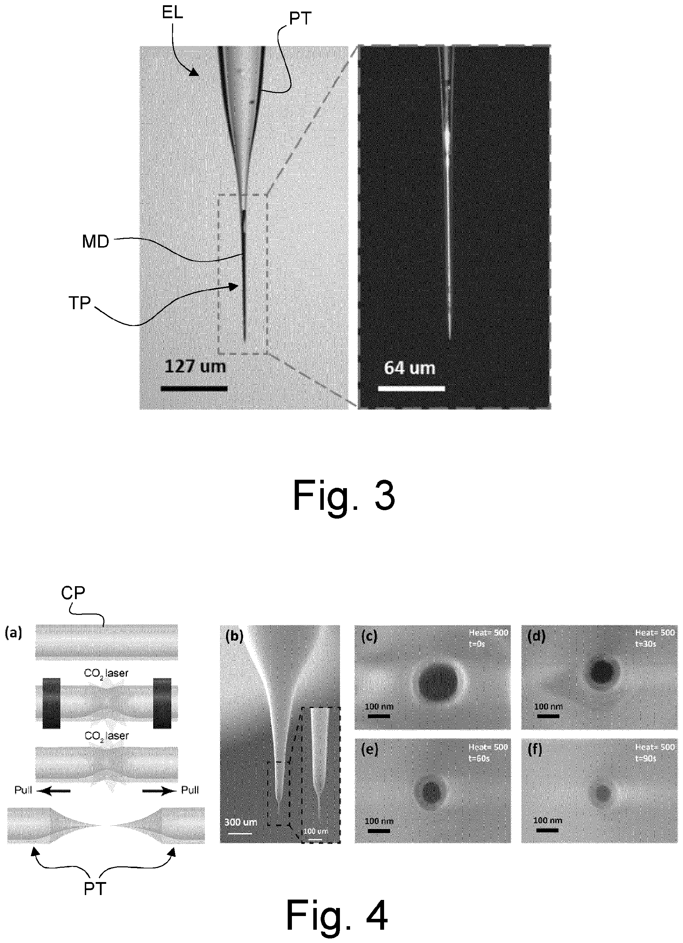

- Figure 3 shows two optical micrographs of an as-grown gold (Au) nanoelectrode in both transmission (left portion of Figure 3) and reflection (right portion of Figure 3) modes;
- Figure 4 illustrates the fabrication of glass nanopipettes, with (a) schematically showing a laser-pulling approach involving local laser shrinking of a glass capillary and hard pulling of the capillary in opposite directions to cause formation of a pair of nanopipettes, (b) being an image obtained by scanning electrode microscopy (SEM), or SEM image, at a tilted angle (54°), of a typical peak-shaped glass nanopipette with a short taper, and (c) to (f) being top-view SEM images of glass nanopipettes produced at different laser shrinking times and a given heat value;

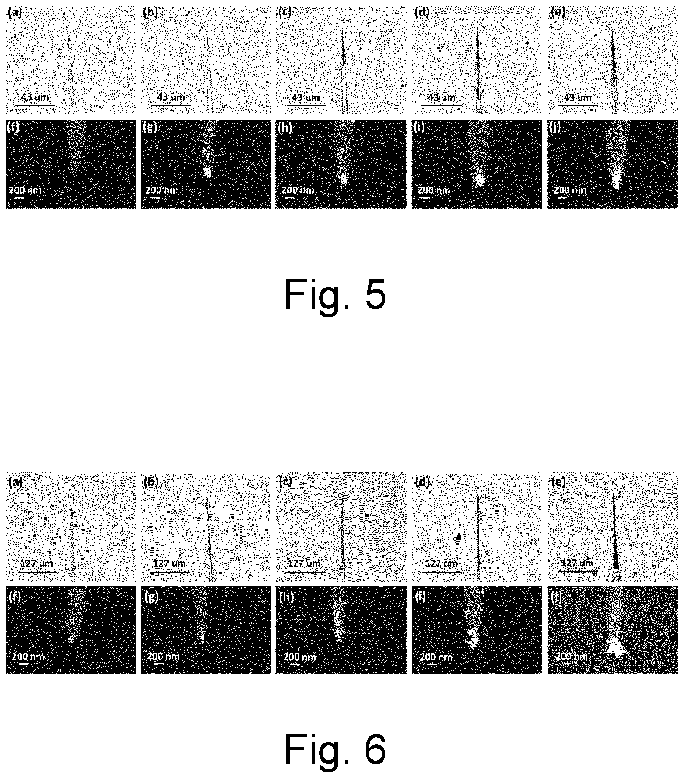

- Figure 5 illustrates the effect of bulk media on metal deposit growth, with (a)-(e) and (f)-(j) being optical micrographs and SEM images, respectively, of gold (Au) nanoelectrodes produced in different bulk media of air (a, f), pure ethylene glycol (EG) (b, g), and ethylene glycol (EG) containing 100 µl (c, h), 300 µl (d, i) and 500 µl (e, j), respectively, of 200 mM sodium borohydride (NaBH₄) in ethanol, the experiments having been performed with a chemical growth solution of 10 µl of 0.5 M of chloroauric acid (HAuCl_{4,aq}) in 1 ml of ethylene glycol (EG) at 110°C for 24 hours;
- Figure 6 illustrates the effect of gold ion concentration on metal deposit growth, with (a)-(e) and (f)-(j) being optical micrographs and SEM images, respectively, of gold (Au) nanoelectrodes produced with different gold ion concentrations of 0.001 M (a, f), 0.0625 M (b, g), 0.125 M (c, h), 0.25 M (d, i) and 0.5 M (e, j), respectively, of tetrachloroaurate ions ([AuCl₄]⁻) in ethylene glycol (EG), the experiments having been performed within bulk media consisting of a bulk solution containing 2 ml of ethylene glycol (EG) and 0.5 ml of 200 mM sodium borohydride (NaBH₄) in ethanol at 110°C for 24 hours;

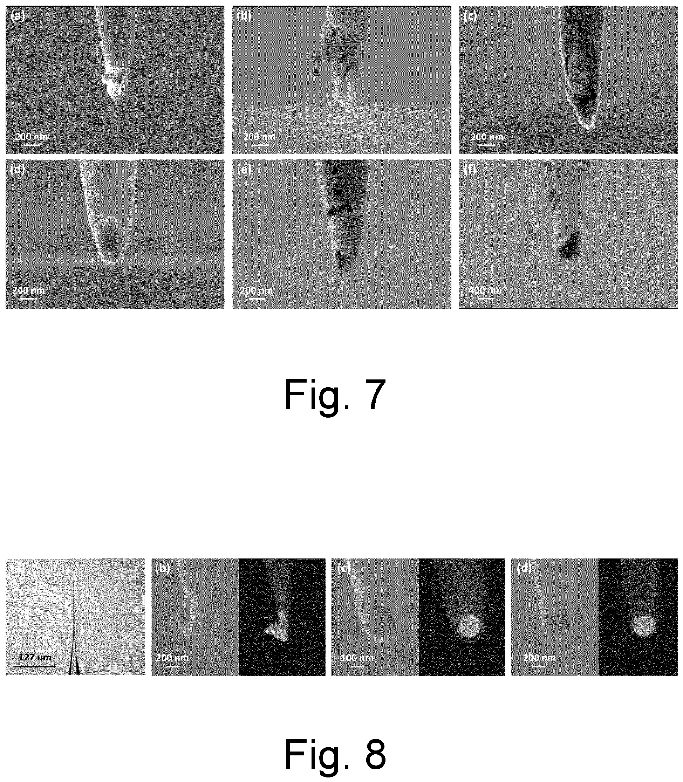

- Figure 7 illustrates the effect of growth temperature and time on metal deposit growth, with (a)-(f) being SEM images of gold (Au) nanoelectrodes produced with (a) 24h, (b) 36h and (c) 48h growth times (at 110°C) and (d) 110°C, (e) 120°C and (f) 130°C growth temperatures (for 24 hours), the experiments having been performed with a chemical growth solution of 10 µl of 0.5 M of chloroauric acid (HAuCl_{4,aq}) in 1 ml of ethylene glycol (EG) and bulk media consisting of a bulk solution containing 2 ml of ethylene glycol (EG) and 0.5 ml of 200 mM sodium borohydride (NaBH₄) in ethanol;

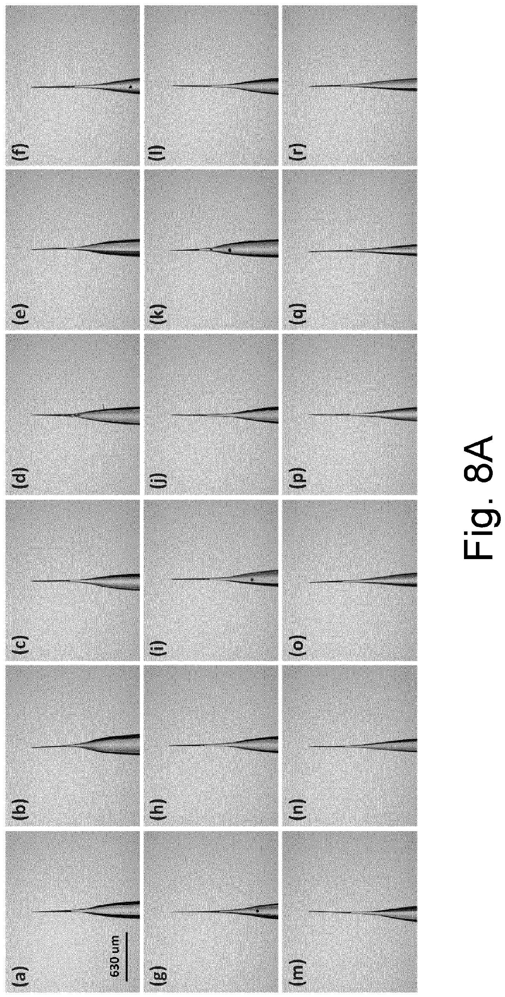

- Figure 8 illustrates a gold (Au) nanoelectrode obtained at optimized growth conditions, with (a) being an optical micrograph of the tapered portion of the nanoelectrode and (b)-(d) being tilted-view SEM images of (b) the tapered portion of the as-grown nanoelectrode and (c, d) the tapered portion of the nanoelectrode after first (c) and second (d) focused ion beam (FIB) milling steps, the optimized growth conditions consisting in (i) the use of a chemical growth solution of 0.25 M of chloroauric acid (HAuCl_{4,aq}) in ethylene glycol (EG), (ii) the use bulk media consisting of a bulk solution containing 2 ml of ethylene glycol (EG) and 0.5 ml of 200 mM sodium borohydride (NaBH₄) in ethanol, (iii) 110°C growth temperature and (iv) 24h growth time;
- Figure 8A is illustrative of the reproducibility of the fabrication process of the invention at the optimized growth conditions, with (a)-(r) being optical micrographs of the tapered portion of a variety of gold nanoelectrodes produced in accordance with the invention;

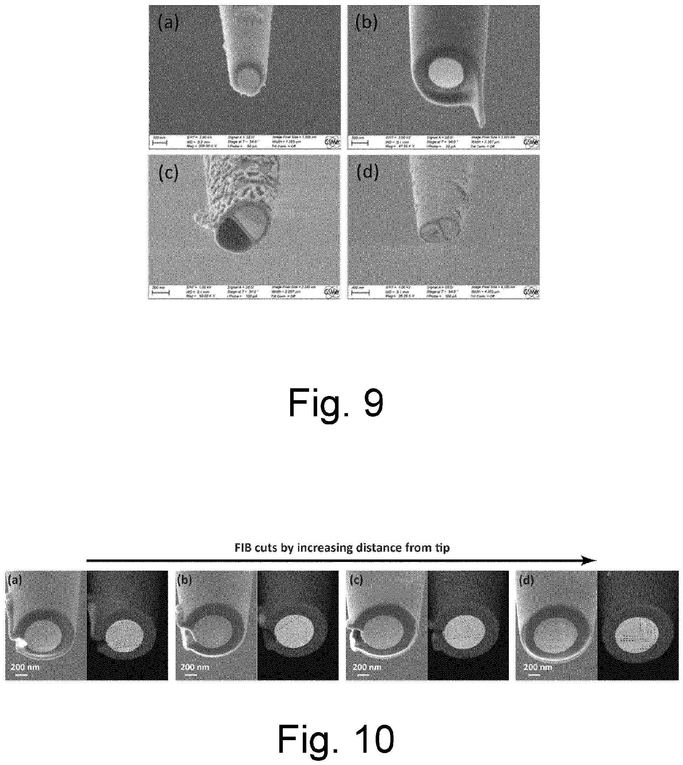

- Figure 9 is illustrative of the flexibility of the approach according to the invention, which allows e.g. the production of micro-/nanoelectrodes based on other metals, such as (a) a platinum (Pt) nanoelectrode (the tip of the tapered portion of which is shown after having been subjected to a FIB milling process) and other configuration of micro-/nanoelectrodes, such as (b) recessed disc-shaped or recessed L-shaped metal nanoelectrodes for simultaneous catalytic activity and topography mapping, and (c) double-barrel nanoelectrodes and (d) dual metal nanoelectrodes for simultaneous mapping of catalytic activity with other information such as topography mapping and pH observation for advanced electrochemical microscopy;

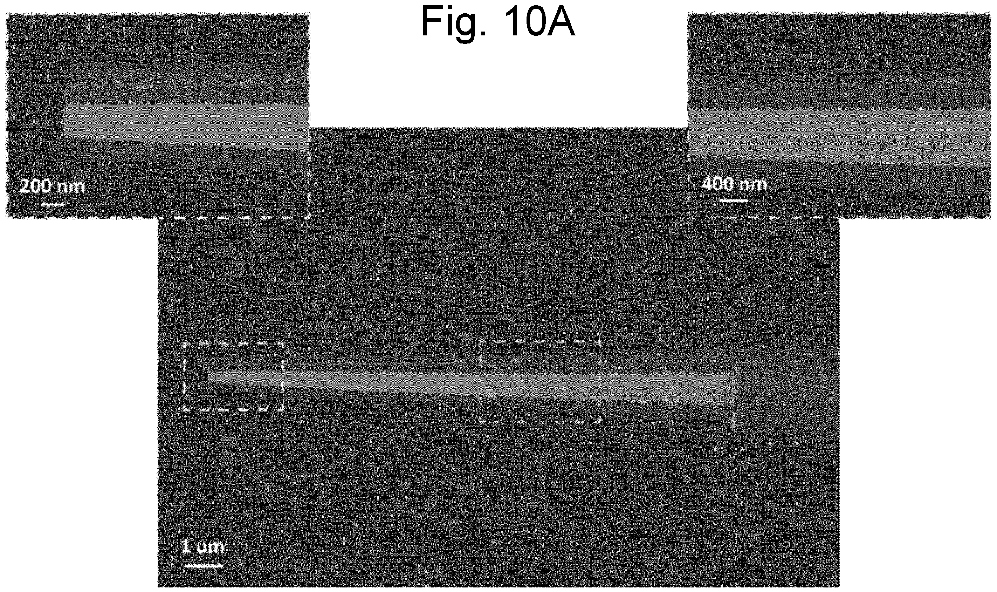

- Figure 10 shows various SEM images of different cross-sections of the tip of the tapered portion of a gold (Au) nanoelectrode produced in accordance with the invention, the different cross-sections being taken at different positions along the axial length of the gold deposit and highlighting the crystal rotation during the upward growth of the gold deposit, which is indicative of a single-crystalline structure ;
- Figure 10A is a SEM image of an axial FIB cut from the centre of a gold (Au) nanoelectrode produced in accordance with the invention, with the upper left and right images showing enlarged views of the metal deposit taken at the tip of the nanoelectrode and along the length of the nanoelectrode, respectively;

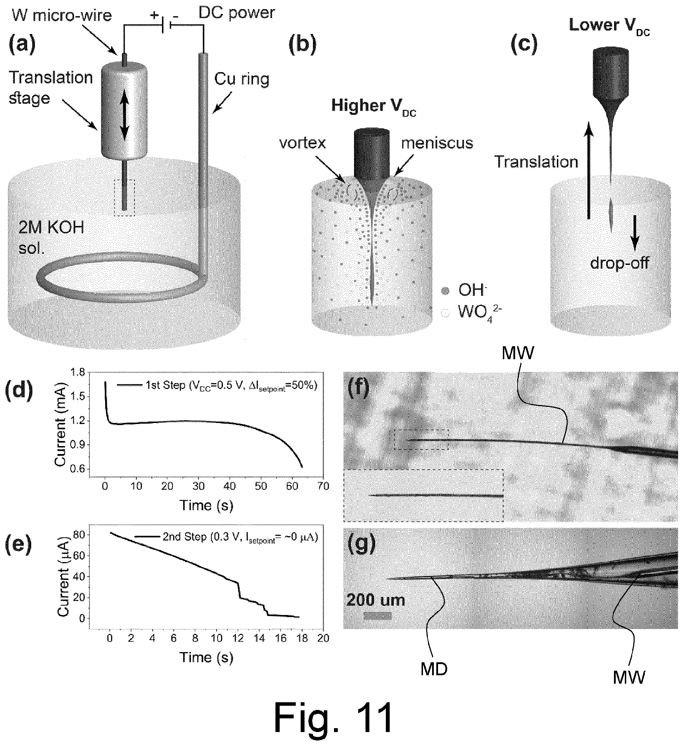

- Figure 11 illustrates a two-step electrochemical etching of a tungsten (W) micro-wire as used for physically connecting to the metal deposit of the micro-/nanoelectrode of the invention, with (a) being a schematic depiction of the etching setup; (b) showing a first, incomplete etching of the micro-wire, (c) showing a second, final etching of the micro-wire, (d) and (e) being chronoamperograms of the etched micro-wire of (b) and (c), respectively, (f) being an optical micrograph of an illustrative electrochemically-sharpened long-taper tungsten (W) micro-wire, and (g) being an optical micrograph of the micro-wire after insertion inside the glass nanopipette for physical contact with the metal deposit of the nanoelectrode; and

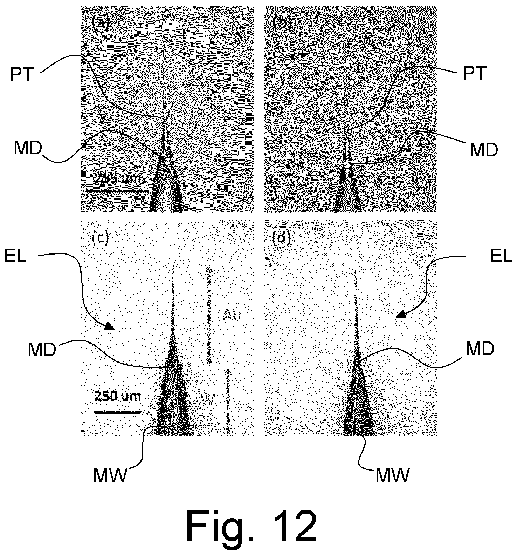

- Figure 12 shows optical micrographs of the tapered portion of gold (Au) nanoelectrode produced in accordance with the invention, (a, b) without any micro-wire and (c, d) with a physical contact of a commercially available 25 µm tungsten (W) micro-wire.

### DETAILED DESCRIPTION OF EMBODIMENTS OF THE INVENTION

The present invention will be described in relation to various illustrative embodiments as illustrated in particular by Figures 1 to 12. It shall be understood that the scope of the invention encompasses all combinations and subcombinations of the features of the embodiments disclosed herein as defined by the appended claims.

The expressions "nanoelectrodes" and "nanopipette templates" will be used in the following description to respectively designate electrodes and pipette templates of nanometric scale which are obtainable in accordance with the present invention. The invention is however also applicable to the production of electrodes of micrometric scale. In other words, when the expressions "nanoelectrodes" and "nanopipette templates" are used in the following, these should not be construed as specifically limiting the invention solely to the production of electrodes of nanometric scale, but merely illustrate a preferred field of application of the invention. The expression "(nano)pipette(s)" and "(nano)pipette template(s)" are also used interchangeably in the following description. Furthermore, the acronyms "UME(s)" and "NE(s)" will be used in the following as relevant abbreviations for the terms "microelectrode(s)" and "nanoelectrode(s)", respectively. Furthermore, when the expression "*thin-wall*" is used, it should be understood as referring more specifically to UMEs/NEs exhibiting an RG value that is below 10, especially UMEs/NEs exhibiting an RG value of less than 2.

Figure 1 is a schematic diagram illustrating a method of producing a micro-/nanoelectrode, designated by reference sign EL, in accordance with an embodiment of the invention. From a general perspective, the method includes the following essential steps:
(a) providing a glass pipette template PT, the glass pipette template PT exhibiting a tapered portion TP terminating with a tip of micrometric or nanometric scale, the tapered portion TP being adapted to contain a solution;
(b) filling at least part of the tapered portion TP of the glass pipette template PT with a chemical growth solution GS containing a metal precursor suitable for selective growth of a metal deposit MD inside the tapered portion TP;
(c) processing the taper-filled glass pipette templates PT in bulk media BM containing a reacting agent to drive nucleation and growth of a metal deposit MD from the chemical growth solution GS in the tapered portion TP of the glass pipette template PT; and
(d) physically connecting a micro-wire MW to the metal deposit MD formed inside the tapered portion TP of the glass pipette template PT.

In the illustration of Figure 1, the relevant glass pipette template PT is conveniently produced from a suitable glass capillary CP by a laser pulling process (which is known as such in the art), for instance from borosilicate glass. This laser pulling process especially allows the production of suitable glass nanopipettes with a tip radius, as measured at the tip of the tapered portion TP, that is below 100 nm, and, even more preferably, below 20 nm, which nanopipettes are used as templates for selective growth of long-length metal deposits inside the tapered portion of the nanopipette templates (see also section I below). This being said, any other suitable pulling technique could be contemplated, including pulling techniques making use of a heating coil or filament to locally soften the glass material of the glass capillary CP.

The chemical growth solution is preferably a polyol-based solution containing suitable metal ions, for instance in the form of a suitable metal salt, for ensuring continuous and selective growth of the metal deposit after complete blockage of the nanopipette orifice. By way of example, a suitable chemical growth solution for the production of gold (Au) nanoelectrodes includes tetrachloroaurate ions ([AuCl₄]⁻) and ethylene glycol (EG). At least part of the tapered portion TP of the glass nanopipette template is filled with the relevant chemical growth solution GS and the taper-filled glass nanopipette PT is processed to drive nucleation and growth of a corresponding metal deposit MD, such as a gold (Au) deposit, from the chemical growth solution GS in the tapered portion TP of the glass pipette template PT. In this particular context, the polyol solution also acts as a weak reducing agent upon being heated up. In the case of ethylene glycol (EG), when it is heated up, this results in the formation of aldehyde groups that can reduce gold ions. In effect, after complete blockage of the nanopipette's orifice, the gold deposit can continue to grow, advantageously leading to the formation of a long-length metal deposit.

Processing the taper-filled glass pipette templates is preferably carried out by inserting the taper-filled glass pipette templates PT into the bulk media BM comprising the reacting agent (for instance in glass vials containing the bulk media BM) and heating the taper-filled glass pipette templates PT inserted in the bulk media BM. This can advantageously be conducted in batches by e.g. holding each taper-filled glass pipette template PT vertically into glass vials V containing the bulk media BM and simultaneously processing the glass vials V within a suitable furnace F, such as a muffle furnace, as schematically shown in Figure 2.

In one embodiment, the bulk media BM comprises ethylene glycol (EG) and sodium borohydride (NaBH₄) in ethanol, and the growth temperature and duration are preferably selected to exceed 60°C and be of at least 4 hours, respectively. By way of illustration, in the following practical examples, the growth temperature and duration have been selected to be of 110°C and 24 hours, respectively.

As a result of the processing, huge, long-length metal crystals, namely gold (Au) in the illustrated embodiment, grow inside the tip-portion TP of the nanopipette templates PT to form the desired metal deposit MD. Figure 3 shows two optical micrographs of an as-grown gold (Au) nanoelectrode EL in both transmission (left portion of Figure 3) and reflection (right portion of Figure 3) modes, as produced in accordance with the invention.

Physical contacting of the metal deposit MD is then ensured by inserting a micro-wire MW, such as a tungsten (W) micro-wire, inside the nanopipette template PT up to the tapered portion TP thereof until physical contact is made with the metal deposit MD (as discussed hereinafter with reference to Figures 11 and 12). Insertion of the micro-wire MW and physical connection with the metal deposit MD can conveniently be carried out under an optical microscope.

As an optional step, which is especially carried out with a view to produce nanoelectrodes EL that are suitable for scanning electrochemical microscopy (SECM), a perfecting step is further carried out to shape an extreme end of the tapered portion TP of the glass pipette template PT and the metal deposit MD formed therein. This perfecting of the tapered portion TP of the glass pipette template PT is preferably performed by focused ion beam (FIB) milling (see e.g. Figures 8 and 9). Alternatively, mechanical polishing could also be contemplated to perfect the electrodes' tip. In such case, a temporary protective coating of the electrode surface, in the area of the tip, with a relatively thick layer of strengthening material is recommendable, which protective coating can be removed following completion of the mechanical polishing step.

### I. Fabrication of suitable nanopipette templates

Ideal-shape nanopipettes with sub-10 nm radius orifice sizes and approx. 3 mm shank length (200-300 µm taper length) were fabricated from without-filament thin-wall glass (e.g. borosilicate) capillaries (1.2 mm outer diameter, 0.69 mm inner diameter; item reference GB120-10 from Science Products GmbH) using an advanced pulling approach consisting of laser shrinking and hard pulling steps (as schematically shown in Figure 4(a)). Glass capillaries CP without filament were used to prevent evaporation of the growth solution and decrease the formation of nanoparticles on the exterior surfaces during the metal deposition process. First, a cleaned glass capillary CP was locally shrunk at the centre using a pair of home-made stoppers and executing the "Laser Shrinking" program reported in Table 1 below. The amount of Heat input and irradiation Time determine the level of laser shrinking at this step. Next, the stoppers were gently removed, and the pre-shrunk glass capillary CP was pulled into two identical nanopipettes PT using the "Hard Pulling" two-line program reported in Table 1. At optimized Heat input values for the first and second lines, the Delay parameter, which is the delay time between the laser irradiation and the pulling processes, controls the shank length of the nanopipettes PT. By this method, the inventors have been able to reproducibly (~90%) fabricate peak-shaped ultra-small nanopipettes PT having a very short taper with a good control over the orifice size. The orifice size can be independently controlled by the shrinking time for a specific short taper length, e.g. 250 µm, for the nanopipettes, as shown in the SEM image of Figure 4(b). Figure 4(c)-(f) shows the decreasing trend of the orifice by increasing the shrinking time from 0 s to 30 s, 60 s and 90 s, respectively. It is to be noted that the Heat and Delay parameters reported for the second step in Table 1 should be adjusted for different shrinking times in order to achieve short taper and small nanopipettes. Generally, a higher Heat input and shorter Delay time is required for longer shrinking times, i.e. thicker glass walls. Increasing the Heat value in the shrinking step can result in much smaller nanopipettes in shorter shrinking Times.

**Table 1**

| Step | | Heat | Filament | Velocity | Delay | Pull | Time |
|---|---|---|---|---|---|---|---|
| Laser Shrinking | | 550 | 5 | 12 | 120 | 0 | 90 s (variable) |
| Hard Pulling | Line 1 | 440 | 3 | 30 | 220 | 0 | N/A |
| | Line 2 | 450 | 4 | 40 | 190 | 255 | 8-9 s (laser on) |

Parameters for fabrication of 20 nm-radius short-taper borosilicate glass nanopipettes

### II. Fabrication of gold (Au) nanoelectrodes

Gold (Au) nanoelectrodes (NEs) were fabricated by the wet chemical growth process of the invention inside adequately shaped borosilicate glass nanopipette templates (20 nm radius and 250 µm taper length). A special filling procedure was found to be ideally suited in this case. First, pure ethylene glycol (EG) was slightly front filled by capillary action in the distal end section at the tip of the glass nanopipettes. Next, the glass nanopipettes were back filled with a chemical growth solution containing more than 0.05 M (preferably 0.25 M) of chloroauric acid (HAuCl₄) in ethylene glycol (EG) using a home-built glass injector. No centrifugation force or microwave heating was used for complete filling of the nanopipettes due to their role in the formation/accumulation of unwanted nanoparticles across the narrow channel taper of the nanopipette that would otherwise make different nucleation sites and discontinuity in the gold deposit during the final growth process. This procedure resulted in the presence of a small air bubble between the back-filled high-concentration solution and the tiny front-filled solution of pure ethylene glycol (EG) at the distal end section at the tip of the nanopipette, which beneficially avoids rapid mixing and homogenization of the tetrachloroaurate ions ([AuCl₄]⁻) with the front-filled solution.

The taper-filled nanopipettes were then held vertically in glass vials containing bulk media in the form of a bulk solution of 2 ml of ethylene glycol (EG) and 0.5 ml of 200 mM sodium borohydride (NaBH₄) in ethanol. A metallic tweezer was used to puncture the vial caps and small pieces of silicone tubes were used for holding the nanopipettes inside the caps. Next, the vials were rapidly transferred to a muffle furnace heated at 110°C for 24 hours to perform chemical growth of the desired gold deposit. In this condition, the tetrachloroaurate ions ([AuCl₄]⁻) are gradually transported from the nanopipette stem (high concentration) towards the nanopipette's opening at the tip (low concentration) due to diffusion and convection. At the nanopipette tip there is the highest physical confinement effect and the highest concentration of the strong reducing agent for gold nucleation, namely the anion [BH₄]⁻, also named borohydride. This results in single-crystalline growth of multiple twinned gold (Au) seeds at the nanopipette orifice that eventually block the channel and continue to grow upward by the aldehyde (-CHO) reducing ions from the heated ethylene glycol (EG) inside the nanopipette. This condition enables selective growth of continuous approx. 300 µm-length gold (Au) deposits at an >80% repeatability with the least amount of unwanted gold particles and glass etching on the exterior surfaces. The NEs were then naturally cooled down in the furnace and rinsed with ultrapure water and ethanol with a view to remove residues of the bulk solution from their surface. A cleaning treatment consisting of consecutive cycles of water and ethanol injection and removal was then performed on the as-grown NEs in order to remove the unwanted particles that are randomly formed inside the nanopipette body. A micro-capillary glass nozzle connected to a weak vacuum pump was used for this purpose. The tiny air bubble created during the two-step filling process was found advantageous also for decreasing the formation of unwanted particles in the very narrow section of the nanopipettes.

Next, a long-taper tungsten (W) micro-wire was physically connected to the gold (Au) deposit under an optical microscope to establish a soft electrical contact (see section IV below). A double-side tape and an epoxy resin (Torr Seal; Varian Vacuum Technologies) were used for temporarily fixing the nanoelectrode and electrical connection on a glass coverslip. The gold (Au) NEs were finally perfected by FIB milling of the protruding gold deposit and imperfect portions on the extremity of the glass nanopipette to expose desired disc-shaped electrodes. In order to facilitate this FIB milling process, multiple NEs can be held onto an adequate FIB/SEM stub. A 30 keV and 1 pA gallium (Ga) ion beam was used for FIB imaging to prevent severe etching of the gold (Au) NEs, and a 30 keV and 2 pA beam was used for sharp cutting of the NEs with the least amorphization effect.

To identify the optimal growth conditions, the inventors have performed several concentration-dependent studies.

Controlled experiments in different bulk media of (i) air, (ii) pure ethylene glycol (EG), and (iii) ethylene glycol (EG) containing different concentrations of sodium borohydride (NaBH₄) (see Figure 5) show that, instead of a random formation across the whole inner surface, gold nucleation and growth is always initiated via a space confinement effect at the tip of the nanopipette. After blocking the glass nanopipette orifice, the gold (Au) deposit continues to grow within the nanopipette. Moreover, the growth of larger-size gold deposit for higher concentrations of NaBH₄ indicates the diffusional transport of the [BH₄]⁻ reducing ions through the nanopipette orifice during the growth process and their accelerating role for the crystal growth rate.

A systematic study on the effect of the concentration of tetrachloroaurate ions ([AuCl₄]⁻) in the chemical growth solution (see Figure 6) also revealed that the crystal growth is very concentration-dependent with a self-terminating growth, wire-like helical growth, and complete conical growth for low (0.0005-0.001 M), medium (0.0625-0.125 M), and high (0.25-0.5 M) concentrations, respectively. On the other hand, large amount of unwanted gold nanoparticles have a tendency to form on the exterior surface of the nanopipette for high concentrations of [AuCl₄]⁻ (see Figure 6(f)-(j)), revealing that the gold ions also diffuse out of the nano-orifice during the growth process in a reverse direction to the transport of [BH₄]⁻ ions. These unwanted nanoparticles limit the realization of small-size disc-shape NEs. Therefore, as discussed above, to combine the benefits of low and high concentrations of [AuCl₄]⁻ (no unwanted particles and long gold deposit, respectively), a time-dependent variable concentration growth condition is preferably exploited. As mentioned above, the nanopipette tip is front filled with a small amount of pure ethylene glycol (EG) while the nanopipette is back filled with a chemical growth solution with a high concentration of [AuCl₄]⁻. Under these conditions, at the beginning of the growth process, [AuCl₄]⁻ are present in minimal amounts and cannot contribute to the massive growth of undesirable nanoparticles on the exterior of the nanopipette. As the gold ions gradually transport from the nanopipette stem towards the opening at the tip due to diffusion and convection, they can be reduced by counter diffusing [BH₄]⁻ ions and the aldehyde groups of the heated ethylene glycol (EG), which favours the growth of a very long gold (Au) deposit. The morphological change of the gold deposit across the nanopipette channel is an indication of the crystal growth in a variable [AuCl₄]⁻ concentration condition.

The experimental studies conducted by the inventors also indicate that the tip of the borosilicate glass nanopipette faces a somewhat severe chemical attack/etching at both higher [AuCl₄]⁻ and NaBH₄ concentrations, which unwanted effect is strongly enhanced by increasing growth temperature and growth time (see Figure 7). This negatively affects the gold/glass interface seal quality eventually requiring a FIB cut at higher sections and limiting the achievement of ultra small NE sizes.

Overall, it has been found that (i) the use of a chemical growth solution of 0.25 M of chloroauric acid (HAuCl₄) in ethylene glycol (EG), combined with (ii) the use of a bulk solution containing 2 ml of ethylene glycol (EG) and 0.5 ml of 200 mM of sodium borohydride (NaBH₄) in ethanol, (iii) 110°C growth temperature, and (iv) 24h growth time were optimized conditions for the production of small-size gold (Au) NEs. In effect, 20 nm-radius glass nanopipettes have been successfully employed thanks to the present invention with a view to produce even smaller NEs by decreasing the unwanted formation of nanoparticles on the exterior surfaces of the nanopipettes and by allowing FIB milling of the imperfects portions as close as possible to the original nanopipette tip. These optimized conditions resulted in an approximately 80% success rate for achieving around 300 µm continuous gold deposits completely filling the conical part of the nanopipette with the least amount of unwanted growth residues (see Figures 8 and 8A). Even if gold deposit typically protrudes slightly out from the nanopipette orifice following the chemical growth process (as shown in Figure 8(b)), one FIB milling step is typically sufficient to guarantee a sub-100 nm-radius gold NE after FIB milling (as shown in Figure 8(c)). However, the complete, i.e. gap-free, nature of the chemical growth process enables controlled fabrication of even larger-size NEs and/or NEs having any specific size (see e.g. Figure 8(d)) with a very narrow size distribution.

Figure 9 further highlights the flexibility in the proposed approach which allows the production of micro-/nanoelectrodes based on other metals, such as platinum (Pt) (see Figure 9(a)) or other metals such as silver (Ag), copper (Cu), palladium (Pd), bismuth (Bi) (and possible alloys thereof). Figure 9 further highlights that the invention is applicable to the production of other configurations of micro-/nanoelectrodes, including but not limited to recessed disc-shaped (also referred to as recessed L-shaped) metal nanoelectrodes for simultaneous catalytic activity and topography mapping (Figure 9(b)), and double-barrel nanoelectrodes (Figure 9(c)) and dual metal nanoelectrodes (Figure 9(d)) for simultaneous mapping of catalytic activity with other information such as topography mapping and pH observation for advanced electrochemical microscopy.

### III. Material characterization

Axial and cross-sectional FIB cuttings and SEM imaging were used for precise characterization of the gold/glass interface and the growth mechanism of the gold deposit. Cross-sectional FIB cutting (see Figure 10) shows that there is no gap at the gold/glass interface and that the gold core clearly consists of multiple domains separated by very straight boundaries, an indication of twinning defect in single-crystalline structures. A further cross-sectional FIB cutting on the electrode shows a displacement of the position of the twinning boundaries, a requirement for propagation of the twinning boundaries and complete gold growth in the conical nanopipette channel. An axial FIB cut from the centre of a gold NE produced in accordance with the invention (see Figure 10A) shows that the gap-free interface stays perfect even up to tens of micrometres away from the tip, and an axial twinning boundary is observed across the length of the deposit, especially at upper parts.

Bright-field transmission electron microscopy (BF-TEM) and Astar-TEM experiments have also been employed for further analysis of the structure of the NEs. Experiments have been performed on a small and a large-size electrode. TEM samples have been prepared by making a lamella from the end of the NEs. Briefly, the gold NEs have been thoroughly coated with a ~10 nm carbon layer for decreasing the charging effects. Then, local carbon deposition has been employed inside the FIB/SEM machine for handling a tiny cut of the gold NE by a sharp manipulator and its transfer to a TEM grid. The samples have been further thinned down to < 100 nm for TEM analysis. BF-SEM images of the electrodes show a complete growth for both gold NEs. Importantly, the gold discs show a twinned structure with fewer domains for the smaller size NE and more domains for the bigger size electrode. Astar-TEM experiments further reveal the crystallographic nature of the domains and the boundaries, which consisted in scanning a processed electron beam over the sample area, and thus producing a collection of precession electron diffraction patterns. Automatic index matching of the collected diffraction patterns finally allows orientation/phase mapping at nanoscale. The orientation map of the small electrode showed a close-to-[111] bigger domain, i.e.[7 7 11], that is separated from two [3 3̅ 8̅ ]̅ neighbouring small domains by <111>-oriented Σ3 twining boundaries. Similarly, a close to [111] orientation, i.e. [7 5 11], was observed for the bigger domains, but with [-6 -4 -11] for smaller domains. Comparing the bigger electrode to the smaller one shows a larger angular deviation between the orientation of the bigger domain and the [111] axis for the bigger electrode as compared to the smaller electrode, and larger numbers of twinning domains, which is an indication of crystal rotation during the growth process. This is in agreement with the displacement observed for the twinning boundaries in the cross-sectional FIB tomographic studies (see Figure 10).

### IV. Electrochemical sharpening of long taper tungsten micro-wire

A tungsten (W) micro-wire (25 µm diameter, Goodfellow, 99.9%) was first inserted into a thinned glass capillary for the purpose of straightening and fixed using an epoxy resin. Using a standard one-step drop-off method, 5 mm of the tungsten (W) micro-wire was vertically immersed into a 2 M KOH etchant solution, and a DC potential was applied between the tungsten wire and a copper (Cu) wire loop cathode for oxidative dissolution of the tungsten micro-wire into WO²⁻ anions in water (see Figure 11). At this condition, the highest reaction rate occurs at a depth slightly below the meniscus at air-electrolyte interface (see Figure 11(b)) due to the formation of a vortex below the meniscus and increasing accumulation of water-soluble WO²⁻ anions at the lower parts of the tungsten micro-wire that lowers the activity of the OH⁻ etching ions. This results in a necking shape that becomes thinner and thinner and eventually leads to the drop-off of the bottom part of the micro-wire with very sharp ends (see Figure 11(c)), corresponding to a continuous decrease (see Figure 11(d)) and a sudden drop (see Figure 11(e)) in the current, respectively. Voltage-dependent studies have revealed that decreasing the applied potential in a standard drop-off method can increase the taper length of the etched tungsten micro-wire, but it is not significant and is very time consuming, e.g. ~4 min for a 0.3 V bias, for realization of relatively long-taper tungsten micro-wires, which do not however have an ideal geometry for contacting purposes. Therefore, a two-step etching process has been developed consisting of an incomplete etching step for thinning down a long length of the tungsten micro-wire (as shown schematically in Figure 11(b)), and a final cutting step on a thinned section of the micro-wire after lifting the micro-wire up and then applying a lower applied potential (as shown schematically in Figure 11(c)). The first step can be controlled by controlling the continuous current drop, e.g. a 50% change, allowing control over the width of the etched micro-wire, and the second step can be controlled by the sudden current drop, allowing control over the taper length and the tip radius by adjusting the amount of uplift, e.g. 3 mm, and applied potential e.g. 0.2 V. Thanks to this two-step approach, an >90% reproducibility was achieved for production of the desired profile (5 µm in diameter and 700 µm in taper length) of the tungsten micro-wires for gold NEs. It is to be noted that both very thick and very thin tungsten micro-wires were found to be impractical due either to their highly damaging impact on the comparatively weak glass walls or their high tendency to suddenly bend during the insertion process.

This being said, in other embodiments, subject to the formation of a sufficiently big metal deposit at the tapered portion of the glass nanopipette (as shown e.g. in Figure 12(a)-(b)), commercially available tungsten (W) micro-wires could still be potentially used to establish a physical connection with the metal deposit, as shown e.g. in Figures 12(c)-(d).

Furthermore, other conductive materials could be contemplated beyond tungsten (W), including but not limited to copper (Cu), silver (Ag) and platinum (Pt), and such conductive materials could likewise be subjected to an electrochemical sharpening process, if desired or required.

### V. Electrochemical characterization of gold (Au) nanoelectrodes

Electrochemistry, due to its unique capacity to probe the solid-electrolyte interface, is capable to detect imperfections beyond the resolution limit of advanced electron microscopy techniques. However, despite their common use, the customary methods of electrochemical characterization via outer-sphere voltammetry, SECM approach curve, and RF factor evaluation from blank CVs have serious limitations. Ideally, a perfect NE must show a low-hysteresis CV even at high scan rates, an approach curve that matches well with theory, and a RF value of between 1 and 2. However, it has been reported that even an imperfect UME/NE can also show a perfect outer-sphere CV and approach curve responses. This is due to the fact that outer-sphere reactions are not very sensitive to the surface composition and structure. On the other hand, evaluation of the RF value from calculation of the electrochemical and geometrical active surface areas is based on the assumption of only an oxidation and reduction of a 1 : 1 stoichiometric gold oxide/hydroxyl monolayer, which is extremely difficult to achieve practically at nanoscale. Fast scan chronoamperometry and voltammetry experiments on gold UMEs have shown a scan rate dependency for the RF, with values up to 30 for a 0.1 V.s⁻¹ scan rate, corresponding to a suppressed growth rate and different chemistry for the gold oxide formation after the monolayer formation. Moreover, in-situ ellipsometry, x-ray photoelectron spectroscopy, and electrochemical measurements on single-crystalline gold (111) films have confirmed the formation of a multilayer gold oxide with thickness up to 1.2 nm and ~3 nm, which hugely depends on the previous potential history to the gold and sample preparation. Therefore, the reported RF values for NEs and UMEs obtained by blank CV are often overestimated, typically in the 10-12 range due to multilayers formation, resulting in an intrinsic uncertainty in quality evaluation of the perfect NEs by this technique. Recently, a precise electrochemical assessment method has been reported for analysis of the sealing quality for platinum (Pt) disc UME tips. This assessment is based on an analysis of the electrodes in the double-layer (DL) and hydrogen evolution reaction (HER) regimes, where there is no Faradic redox process and a possible surface diffusion/spillover of hydrogen at the gold/glass interface, respectively. The DL capacitance (C_{dl}) data and the tilt aspect of the CVs can reveal tiny gaps at the gold/glass interface for even electrodes that show perfect outer-sphere CVs. Such a rapid assessment method for quality evaluation of gold NEs produced in accordance with the invention has been implemented by the inventors, which has emphasized the adequacy of the relevant nanoelectrodes for, especially, scanning electrochemical microscopy (SECM).

Various modifications and/or improvements may be made to the above-described embodiments without departing from the scope of the invention as defined by the appended claims. For instance, while the aforementioned embodiments have mainly been described in connection with the production of gold nanoelectrodes, the invention is also applicable to the production of microelectrodes. Furthermore, the chemical growth solution could in effect contain any suitable metal salt or metal ions adapted to drive nucleation and growth of a metal deposit in the presence of a reacting agent contained in the bulk media and heat applied during the chemical growth process. The chemical growth solution could furthermore be any other polyol-based solution suitable to form aldehyde groups upon being heated up and that are capable to participate in the continued growth process with no external addition of a reducing agent inside the chemical grown solution. In that regard, the use of ethylene glycol (EG) as the polyol compound is regarded as a preferred solution, but other polyol compounds could be contemplated.

More specifically, while the use of tetrachloroaurate ions [AuCl₄]⁻ is mentioned for the purpose of driving nucleation and growth of gold (Au) deposits, other gold salts could potentially be contemplated, including gold nitrate, gold acetate, etc.. Similarly, other polyol compounds beyond ethylene glycol (EG) could possibly be contemplated, including but not limited to polyethylene glycol (PEG), diethylene glycol (DEG) and glycerol.

It is furthermore worth reminding that the glass pipette templates may exhibit more than one orifice. For instance, dual-barrel micro-/nanoelectrodes (as shown e.g. in Figure 9(c)-(d)) may be produced using so-called theta capillaries that may likewise be subjected to e.g. laser pulling to produce corresponding pipette templates, in which case only part of the tapered portion of the glass pipette template is filled with the selected chemical growth solution.

### LIST OF REFERENCE NUMERALS AND SIGNS USED THEREIN

- EL: micro-/nanoelectrode
- CL: glass capillary used for production of glass pipette templates PT
- PT: glass pipette templates, e.g. laser-pulled nanopipette templates
- TP: tapered portion of glass pipette template PT / micro-/nanoelectrodes EL
- GS: chemical growth solution containing a metal precursor, e.g. polyol-based solution including a metal precursor, such as tetrachloroaurate ions ([AuCl₄]⁻) in ethylene glycol (EG).
- BM: bulk media containing a reacting agent, e.g. ethylene glycol (EG) and sodium borohydride (NaBH₄) in ethanol
- V: (glass) vials containing the taper-filled glass pipette templates PT in a vertical orientation during the metal growth process
- F: furnace, e.g. muffle furnace
- MD: metal deposit formed as a result of nucleation and growth from the chemical growth solution GS
- MW: conductive micro-wire physically connected to metal deposit MD, e.g. electrochemically sharpened tungsten (W) micro-wire

## Claims

1. A method of producing a metal micro-/nanoelectrode (EL), the method comprising:
(a) providing a glass pipette template (PT), the glass pipette template (PT) exhibiting a tapered portion (TP) terminating with a tip of micrometric or nanometric scale, the tapered portion (TP) being adapted to contain a solution;
(b) filling at least part of the tapered portion (TP) of the glass pipette template (PT) with a chemical growth solution (GS) containing a metal precursor suitable for selective growth of a metal deposit (MD) inside the tapered portion (TP);
(c) processing the taper-filled glass pipette templates (PT) in bulk media (BM) containing a reacting agent to drive nucleation and growth of a metal deposit (MD) from the chemical growth solution (GS) in the tapered portion (TP) of the glass pipette template (PT); and
(d) physically connecting a micro-wire (MW) to the metal deposit (MD) formed inside the tapered portion (TP) of the glass pipette template (PT).

2. The method according to claim 1, wherein the chemical growth solution (GS) is a polyol-based solution.

3. The method according to claim 1 or 2, wherein the metal precursor is a precursor of a metal selected from the group of metals comprising gold (Au), platinum (Pt), silver (Ag), copper (Cu), palladium (Pd), bismuth (Bi) and alloys thereof,
the metal precursor being provided in the form of a metal salt or metal ions contained in the chemical growth solution (GS).

4. The method according to claim 3, wherein the chemical growth solution (GS) includes a gold salt, preferably tetrachloroaurate ions ([AuCl₄]⁻), and a polyol compound, preferably ethylene glycol (EG).

5. The method according to any one of the preceding claims, wherein step (b) includes:
(b.1) preferably introducing a solution devoid of any metal precursor, such as pure ethylene glycol (EG), in a distal end section at the tip of the tapered portion (TP) of the glass pipette template (PT); and
(b.2) back filling the tapered portion (TP) of the glass pipette template (PT) with the chemical growth solution (GS).

6. The method according to any one of the preceding claims, wherein the glass pipette templates (PT) are produced by a pulling process, preferably by a pulling process assisted by laser.

7. The method according to any one of the preceding claims, wherein the glass pipette templates (PT) are made of borosilicate glass.

8. The method according to any one of the preceding claims, wherein the glass pipette templates (PT) are micropipette templates exhibiting a tip radius, as measured at the tip of the tapered portion (TP), that is below 5 µm, or
wherein the glass pipette templates (PT) are nanopipette templates exhibiting a tip radius, as measured at the tip of the tapered portion (TP), that is below 200 nm, especially below 100 nm, and preferably of 20 nm or less.

9. The method according to any one of the preceding claims, wherein step (c) includes insertion of the taper-filled glass pipette templates (PT) into the bulk media (BM) and heating of the taper-filled glass pipette templates (PT) inserted in the bulk media (BM).

10. The method according to claim 9, wherein the bulk media (BM) comprises a polyol compound, such as ethylene glycol (EG), and a reacting salt, such as sodium borohydride (NaBH₄), in an alcohol, preferably ethanol.

11. The method according to claim 9 or 10, wherein heating during step (c) is carried out at a temperature exceeding 60°C for several hours, preferably more than 4 hours.

12. The method according to any one of claims 9 to 11, wherein the taper-filled glass pipette templates (PT) are held vertically during step (c) into vials (V) containing the bulk media (BM),
and wherein the vials (V) are simultaneously processed during step (c) within a furnace (F), preferably a muffle furnace.

13. The method according to any one of the preceding claims, wherein the micro-wire (MW) is a conductive micro-wire preferentially made of tungsten (W), copper (Cu), silver (Ag) or platinum (Pt), which conductive micro-wire (MW) is preferably an electrochemically sharpened conductive micro-wire, and/or
wherein step (d) is performed under an optical microscope.

14. The method according to any one of the preceding claims, further comprising the step of perfecting the tip of the tapered portion (TP) of the glass pipette template (PT) to shape the tip of the tapered portion (TP) of the glass pipette template (PT) and the metal deposit (MD) formed therein,
wherein perfecting the tapered portion (TP) of the glass pipette template (PT) is preferably performed by focused ion beam (FIB) milling.

15. A metal micro-/nanoelectrode (EL) comprising:
a glass pipette body (PT) exhibiting a tapered portion (TP) terminating with a tip of micrometric or nanometric scale;
a single-crystalline metal deposit (MD) formed inside at least part of the tapered portion (TP) of the glass pipette body (PT); and
a micro-wire (MW) extending partly inside the glass pipette body (PT) and physically connected to the single-crystalline metal deposit (MD).
